(19) Europäisches Patentamt / European Patent Office / Office européen des brevets

(11) **EP 2 772 571 B1**

(12) **EUROPEAN PATENT SPECIFICATION**

(45) Date of publication and mention
of the grant of the patent:
**03.06.2020 Bulletin 2020/23**

(21) Application number: **12843047.7**

(22) Date of filing: **22.10.2012**

(51) Int Cl.:
***D01F 1/04*** *(2006.01)*  ***D01F 6/60*** *(2006.01)*

(86) International application number:
**PCT/JP2012/077188**

(87) International publication number:
**WO 2013/061901 (02.05.2013 Gazette 2013/18)**

(54) **SPUN-DYED META-TYPE FULLY AROMATIC POLYAMIDE FIBER**

SPINNGEFÄRBTE VOLLAROMATISCHE META-POLYAMIDFASER

FIBRE DE POLYAMIDE TOTALEMENT AROMATIQUE DE TYPE MÉTA TEINTE DANS LA MASSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.10.2011 JP 2011232996**
**16.12.2011 JP 2011275936**

(43) Date of publication of application:
**03.09.2014 Bulletin 2014/36**

(73) Proprietor: **TEIJIN LIMITED**
**Chuo-ku**
**Osaka-shi**
**Osaka 541-0054 (JP)**

(72) Inventors:
• **HAYASHI, Kensaku**
**Iwakuni-shi**
**Yamaguchi 740-0014 (JP)**
• **KIKUCHI, Satoshi**
**Iwakuni-shi**
**Yamaguchi 740-0014 (JP)**

(74) Representative: **Carpmaels & Ransford LLP**
**One Southampton Row**
**London WC1B 5HA (GB)**

(56) References cited:
**WO-A1-2011/118022      WO-A1-2011/129279
WO-A1-2011/129279      JP-A- S5 059 522
JP-A- H02 229 281       JP-A- 2005 536 660
JP-A- 2007 016 343      JP-B2- S5 145 688**

**Description**

Technical Field

This invention relates to a spun-dyed meta-type wholly aromatic polyamide fiber. More specifically, this invention relates to a spun-dyed meta-type wholly aromatic polyamide fiber with small discoloration and fading due to the light exposure.

Background Art

It is known that wholly aromatic polyamide fibers produced from aromatic diamine and aromatic dicarboxylic dihalide are excellent in the heat resistance and flame resistance, and among such wholly aromatic polyamide fibers, meta-type wholly aromatic polyamide fibers typified by polymetaphenylene isophthalamide are known to be especially useful as heat-resistant and flame-resistant fibers. Furthermore, making use of these characteristics, meta-type wholly aromatic polyamide fibers are preferably used in the field of protective clothing such as a firefighter suit or a heat-resistant work suit (please refer to PTL 1).
In the use in such clothing field, it is general to use a dyed fiber. Further, as a method for obtaining a dyed fiber, a piece-dyeing method for dyeing using a dye after producing a fiber, or a spun-dyeing method for producing a fiber after adding a pigment to a raw spinning solution is known.
Dyed meta-type wholly aromatic polyamide fibers however, are disadvantageous in that discoloration and fading are caused by light irradiation, and the fibers cannot be sometimes used depending on the degree of the discoloration and fading.
Therefore, regarding the piece-dyeing method for dyeing using a dye, a method for preventing fading of a dyed meta-type wholly aromatic polyamide fiber by adding a hindered amine light stabilizer was proposed (please refer to PTL 2). With the method described in PTL 2 however, the decomposition of a dye progresses by light irradiation for a long time, and the discoloration- and fading-resistance for a long time was not satisfactory.
On the other hand, regarding the spun-dyeing method for producing a fiber after adding a pigment to a raw spinning solution, a method for kneading a yellow light fading coloring agent to wholly aromatic polyamide which becomes brown by light irradiation for making the color light and preventing the apparent discoloration and fading as well as prolonging the time required for the discoloration was proposed (please refer to PTL 3). With the method described in PTL 3 however, the effect is not enough in colors except for the yellow color, and the method was not an ultimate solution.

Citation List

Patent Literature

    PTL 1: JP-A-2006-016709
    PTL 2: JP-A-2003-239136
    PTL 3: JP-A-2-229281

Disclosure of Invention

Technical Problem

This invention was made in view of the above background art, and an object thereof is to provide a spun-dyed meta-type wholly aromatic polyamide fiber with small discoloration and fading under the light exposure.

Solution to Problem

The inventors studied extensively to solve the above problems. As a result, the inventors found that, when the content of the solvent remaining in the fiber is at a certain level or lower, the discoloration and fading due to the light exposure of the spun-dyed meta-type wholly aromatic polyamide fiber obtained become smaller, and thus completed this invention.
That is, this invention is a spun-dyed meta-type wholly aromatic polyamide fiber which has a residual solvent content of 0.1% by mass or less based on the whole mass of the fiber, wherein said spun-dyed meta-type wholly aromatic polyamide fiber comprises a pigment.

Advantageous Effects of Invention

The meta-type wholly aromatic polyamide fiber of this invention becomes a spun-dyed meta-type wholly aromatic polyamide fiber with small discoloration and fading due to the light exposure. That is, in addition to the flame resistance and heat resistance, which are original properties of a meta-type wholly aromatic polyamide fiber, the meta-type wholly aromatic polyamide fiber of this invention has a strong point that the discoloration and fading of a product can be prevented even when the product is used under the light exposure for a long time.

In addition, the spun-dyed meta-type wholly aromatic polyamide fiber of this invention becomes a fiber with small shrinkage at a high temperature and with excellent thermal dimensional stability. Accordingly, it is possible to continuously use the fiber stably also for applications with the exposure to flame, the radiation heat or the like.

Therefore, clothing made using the spun-dyed meta-type wholly aromatic polyamide fiber according to this invention exhibits excellent discoloration- and fading-resistance under the light exposure for a long time and exhibits excellent dimensional stability at a high temperature, and thus can be preferably used for protective clothing such as a firefighter suit or a heat-resistant work suit.

Description of Embodiments

<Spun-Dyed Meta-Type Wholly Aromatic Polyamide Fiber>

The spun-dyed meta-type wholly aromatic polyamide fiber of this invention has the following specific physical properties. The physical properties, constitution, production method and the like of the spun-dyed meta-type wholly aromatic polyamide fiber of this invention are explained below.

[Physical Properties of Spun-Dyed Meta-Type Wholly Aromatic Polyamide Fiber]

[Residual Solvent Content]

A meta-type wholly aromatic polyamide fiber is generally produced from a raw spinning solution in which a polymer is dissolved in an amide solvent and a pigment is kneaded, and thus the solvent naturally remains in the fiber. In the spun-dyed meta-type wholly aromatic polyamide fiber of this invention however, the content of the solvent remaining in the fiber is 0.1% by mass or less based on the mass of the fiber. It is essential that the content is 0.1% by mass or less and it is more preferable that the content is 0.08% by mass or less.

When the solvent remains in the fiber in an amount exceeding 0.1% by mass based on the mass of the fiber, the residual solvent vaporizes during the processing or use under a high temperature atmosphere exceeding 200°C, resulting in inferior environmental safety. Further, such content is a cause for the discoloration and fading of the fiber during the use under the light exposure.

In order to achieve the residual solvent content of the fiber of 0.1% by mass or less, the components or the conditions of the coagulation bath are adjusted so that a coagulated form having no skin core is achieved and plasticized drawing is conducted at a specific ratio, during the production steps of the fiber.

In this regard, "the residual solvent content of the fiber" in this invention is a value obtained by the following method.

(Method for Measuring Residual Solvent Content)

A fiber piece in an amount of 1.0 mg was collected and the content of the amide solvent remaining in the fiber was measured using gas chromatography (manufactured by Shimadzu Corporation, model: GC-2010). Then, the residual solvent concentration of the fiber was calculated from the standard curve obtained using the amide solvent as the standard sample.

[Maximum Thermal Shrinkage Rate]

Regarding the spun-dyed meta-type wholly aromatic polyamide fiber of this invention, the maximum thermal shrinkage rate under the rate of temperature increase of 100°C/min and the temperature range of 25 to 500°C is preferably 7.5% or less. The maximum thermal shrinkage rate is preferably 7.5% or less, and more preferably 7.0% or less. When the maximum thermal shrinkage rate exceeds 7.5%, the dimension of a product changes during the use under a high temperature atmosphere, and a problem such as the breakage of a product and the like arises, which is not preferable.

In order to achieve the maximum thermal shrinkage rate of the fiber of 7.5% or less, the components or the conditions of the coagulation bath are adjusted so that a coagulated form having no skin core is achieved, plasticized drawing is conducted at a specific ratio and specific heat treatment is conducted, during the production steps of the fiber.

In this regard, "the maximum thermal shrinkage rate" in this invention is a value obtained by the following method.

(Method for Measuring Maximum Thermal Shrinkage Rate)

Thermal mechanical analyzer EXSTAR6000 manufactured by SII is used as the measurement device, a fiber sample is separated in 480 dtex, and the fiber is pinched with a chuck and used as a measurement sample. The shrinkage rate based on the initial fiber length of the sample at each temperature is measured with the following condition, and among the shrinkage rate results obtained at each temperature, the shrinkage rate at the temperature, at which the shrinkage rate is the highest, is determined to be the maximum thermal shrinkage rate.

<Measurement Condition>

Measurement sample length: 10 mm
Rate of temperature increase: 100°C/min
Measurement temperature range: 25 to 500°C
Load applied on fiber sample: 1.2 cN

[Lightness Index L*]

The lightness index L* of the spun-dyed meta-type wholly aromatic polyamide fiber of this invention is not particularly limited, and may be any color within the range in which coloring with spun-dyeing is possible. Regarding the spun-dyed meta-type wholly aromatic polyamide fiber of this invention however, the effect is remarkable with a fiber with a deep color. Accordingly, the lightness index L* value of the fiber is preferably 40 or less.

[Light Discoloration and Fading Degree (Color Difference: ΔE*) by Xenon Arc Fade Meter]

When the lightness index L* value is 40 or less, the spun-dyed meta-type wholly aromatic polyamide fiber of this invention exhibits a color difference between before and after the irradiation with a xenon arc fade meter at 1.1W/m$^2$ for 80 hours, namely a light discoloration and fading degree (ΔE*), of 24.0 or less. The degree is preferably 23.0 or less, and more preferably 22.0 or less. When the light discoloration and fading degree (color difference: ΔE*) by a xenon arc fade meter exceeds 24.0, the discoloration and fading of the fiber due to light irradiation is significant.

In this regard, "the light discoloration and fading degree (color difference: ΔE*) by a xenon arc fade meter" is a value obtained by the following method.

(Determination Method for Light Discoloration and Fading Degree (Color Difference: ΔE*) by Xenon Arc Fade Meter)

The light discoloration and fading degree (color difference: ΔE*) by a xenon arc fade meter is measured using unirradiated staple fiber and light-irradiated staple fiber which has been irradiated with a xenon arc fade meter at 1.1 W/m$^2$ for a certain time. First, the diffuse reflectance is measured using an illuminant D65 with a field of -10 degrees, and the lightness index L* value and the chromaticness indexes a* and b* values are calculated by usual processing. The area of the measurement light irradiation is 30mmΦ. The light discoloration and fading degree (color difference: ΔE*) is determined by the following equation in accordance with JIS Z-8730 using the values obtained. In this regard, the light discoloration and fading degree (color difference: ΔE*) by a xenon arc fade meter in this invention was determined with the irradiation time of 80 hours.

[Equation 1]

$$\Delta E* = ((\Delta L*)^2 + (\Delta a*)^2 + (\Delta b*)^2)^{1/2}$$

[Light Discoloration and Fading Degree (Color Difference: ΔE*) by Carbon Arc Fade Meter]

When the lightness index L* value is 40 or less, the spun-dyed meta-type wholly aromatic polyamide fiber of this invention exhibits a color difference between before and after the irradiation with a carbon arc fade meter at 135 V and 17A for 72 hours, namely a light discoloration and fading degree (ΔE*), of 2.5 or less. The degree is preferably 2.3 or less, and more preferably 2.1 or less. When the light discoloration and fading degree (color difference: ΔE*) by a carbon arc fade meter exceeds 2.5, the discoloration and fading of the fiber due to light irradiation is significant.

In this regard, "the light discoloration and fading degree (color difference: ΔE*) by a carbon arc fade meter" is a value obtained by the following method.

(Determination Method for Light Discoloration and Fading Degree (Color Difference: ΔE*) by Carbon Arc Fade Meter)

The light discoloration and fading degree (color difference: ΔE*) by a carbon arc fade meter is measured using unirradiated staple fiber and light-irradiated staple fiber which has been irradiated with a carbon arc fade meter at 135 V and 17 A for a certain time, as the light discoloration and fading degree (color difference: ΔE*) by a xenon arc fade meter above. That is, the diffuse reflectance is first measured using an illuminant D65 with a field of -10 degrees, the lightness index L* value and the chromaticness indexes a* and b* values are calculated by usual processing, and the light discoloration and fading degree is calculated by the above equation in accordance with JIS Z-8730 using the values obtained. The area of the measurement light irradiation here is 10 mmΦ. In this regard, the light discoloration and fading degree (color difference: ΔE*) by a carbon arc fade meter in this invention was determined with the irradiation time of 72 hours.

[Ratio of Light Discoloration and Fading Degree (Color Difference: ΔE*) to Spun-Dyed Fiber Having High Residual Solvent Content]

Regarding the spun-dyed meta-type wholly aromatic polyamide fiber of this invention, the light discoloration and fading degree (color difference: ΔE*) between before and after the irradiation with a carbon arc fade meter at 135 V and 17 A for 72 hours is 75% or less of the light discoloration and fading degree (color difference: ΔE*) of a spun-dyed meta-type wholly aromatic polyamide fiber having a residual solvent content of the fiber of 0.4% by mass or more, in which the same pigment is added in the same amount. The degree is preferably 72% or less, and more preferably 70% or less. When the ratio of the light discoloration and fading degree (color difference : ΔE*) to that of a spun-dyed fiber of the same color having a residual solvent content of 0.4% by mass or more exceeds 75%, the discoloration and fading of the fiber due to light irradiation is significant, which is not preferable.

In this regard, "the light discoloration and fading degree (color difference: ΔE*) by a carbon arc fade meter" for determining the ratio of the light discoloration and fading degree (color difference: ΔE*) to that of a spun-dyed fiber having a high residual solvent content is a value obtained by conducting the same method as the method above with the irradiation time of 72 hours.

[Constitution of Meta-Type Wholly Aromatic Polyamide]

The meta-type wholly aromatic polyamide constituting the spun-dyed meta-type wholly aromatic polyamide fiber of this invention is constituted by a meta-type aromatic diamine component and a meta-type aromatic dicarboxylic acid component, and another copolymerization component such as a component of para-type may be copolymerized as long as the object of this invention is not impaired.

The component which is particularly preferably used as the raw material for the spun-dyed meta-type wholly aromatic polyamide fiber of this invention is meta-type wholly aromatic polyamide containing a metaphenylene isophthalamide unit as the main component, in view of the mechanical characteristics, heat resistance and flame resistance.

Regarding the meta-type wholly aromatic polyamide constituted by a metaphenylene isophthalamide unit, the ratio of the metaphenylene isophthalamide unit to all the repeating units is preferably 90 mol% or more, more preferably 95 mol% or more, and particularly preferably 100 mol%.

[Raw Materials for Meta-Type Wholly Aromatic Polyamide]

(Meta-Type Aromatic Diamine Component)

As the meta-type aromatic diamine component serving as the raw material for the meta-type wholly aromatic polyamide, metaphenylene diamine, 3,4'-diaminodiphenyl ether, 3,4'-diaminodiphenylsulfone and the like, and derivatives having a substituent such as halogen and an alkyl group having 1 to 3 carbon atom(s) on these aromatic rings, for example, 2,4-toluylenediamine, 2,6-toluylenediamine, 2,4-diaminochlorobenzene and 2,6-diaminochlorobenzene can be exemplified. Among them, metaphenylene diamine alone or mixed diamine containing metaphenylene diamine in an amount of 85 mol% or more, preferably 90 mol% or more and particularly preferably 95 mol% or more is preferable.

(Meta-Type Aromatic Dicarboxylic Acid Component)

As the raw material for the meta-type aromatic dicarboxylic acid component constituting the meta-type wholly aromatic polyamide, for example, meta-type aromatic dicarboxylic halide can be mentioned. As meta-type aromatic dicarboxylic halide, isophthalic halides such as isophthalic chloride and isophthalic bromide, and derivatives having a substituent such as halogen and an alkoxy group having 1 to 3 carbon atoms on these aromatic rings, for example, 3-chloroisophthalic chloride can be exemplified. Among them, isophthalic chloride alone, or mixed carboxylic halide containing isophthalic chloride in an amount of 85 mol% or more, preferably 90 mol% or more and particularly preferably 95 mol% or more is preferable.

[Production Method for Meta-Type Wholly Aromatic Polyamide]

The production method for the meta-type wholly aromatic polyamide constituting the spun-dyed meta-type wholly aromatic polyamide fiber of this invention is not particularly limited, and the meta-type wholly aromatic polyamide can be produced for example by solution polymerization or interfacial polymerization using a meta-type aromatic diamine component and a meta-type aromatic dicarboxylic chloride component as raw materials.

In this regard, the molar weight of the meta-type wholly aromatic polyamide is not particularly limited as long as a fiber can be formed. In general, in order to obtain a fiber with sufficient physical properties, a polymer having an inherent viscosity (I.V.) measured in concentrated sulfuric acid at a polymer concentration of 100 mg/100 mL sulfuric acid at 30°C of 1.0 to 3.0 is appropriate, and a polymer having an inherent viscosity of 1.2 to 2.0 is particularly preferable.

<Production Method for Spun-Dyed Meta-Type Wholly Aromatic Polyamide Fiber>

The spun-dyed meta-type wholly aromatic polyamide fiber of this invention can be produced using the meta-type wholly aromatic polyamide obtained by the above production method and the like, and for example through the spinning solution preparation step, spinning/coagulation step, plasticized-drawing-bath drawing step, washing step, relaxation treatment step and heat treatment step explained below.

[Spinning Solution Preparation Step]

In the spinning solution preparation step, the meta-type wholly aromatic polyamide is dissolved in an amide solvent, and a pigment is added thereto to prepare a spinning solution (a spun-dyed meta-type wholly aromatic polyamide polymer solution) . In the preparation of a spinning solution, an amide solvent is usually used, and as the amide solvent used, N-methyl-2-pyrrolidone (NMP), dimethylformamide (DMF), dimethylacetamide (DMAc) and the like can be exemplified. Among them, it is preferable to use NMP or DMAc in view of the solubility and handling safety.

As the solution concentration, an appropriate concentration may be appropriately selected in view of the coagulation rate in the spinning/coagulation step as the subsequent step and the solubility of the polymer, and, when the polymer is polymetaphenylene isophthalamide and the solvent is NMP for example, it is usually preferable that the concentration is within the range of 10 to 30% by mass.

(Pigment)

As the pigment used in this invention, organic pigments such as azo, phthalocyanine, perinone, perylene and anthraquinone pigments, or inorganic pigments such as carbon black, ultramarine, colcothar, titanium oxide and iron oxide are mentioned, but the pigment is not limited to these pigments .

As the method for mixing the meta-type wholly aromatic polyamide and the pigment, a method for forming an amide solvent slurry in which the pigment is uniformly dispersed in an amide solvent and adding the amide solvent slurry to a solution in which the meta-type wholly aromatic polyamide is dissolved in an amide solvent, a method for adding pigment powder directly to a solution in which the meta-type wholly aromatic polyamide is dissolved in an amide solvent or the like is mentioned, but the method is not particularly limited. The spinning solution thus obtained (a spun-dyed meta-type wholly aromatic polyamide polymer solution) is formed into fibers, for example through the following steps.

(Pigment Content)

The pigment content is 10.0% by mass or less based on the meta-type wholly aromatic polyamide, and preferably 5.0% by mass or less. When more than 10.0% by mass of the pigment is added, the physical properties of the fiber obtained deteriorate, which is not preferable.

[Spinning/Coagulation Step]

In the spinning/coagulation step, the spinning solution obtained above (a spun-dyed meta-type wholly aromatic polyamide polymer solution) is extruded into a coagulation liquid and coagulated.

The spinning apparatus is not particularly limited, and a conventionally known wet-spinning apparatus can be used. In addition, as long as stable wet spinning can be performed, it is not necessary to particularly limit the spinning hole number, arrangement state, hole shape and the like of a spinneret, and for example, it is possible to use a multi-hole spinneret for staple fibers in which the number of holes is 500 to 30,000 and the spinning hole diameter is 0.05 to 0.2 mm and the like.

In addition, it is appropriate that the temperature of the spinning solution (a spun-dyed meta-type wholly aromatic polyamide polymer solution) extruded from a spinneret is within the range of 10 to 90°C.

As a coagulation bath used for obtaining the fiber of this invention, an aqueous solution with an amide solvent concentration of 45 to 60% by mass containing no inorganic salt is used at a bath liquid temperature within the range of 10 to 35°C. An amide solvent concentration of less than 45% by mass leads to a structure with a thick skin, and thus the washing efficiency in the washing step deteriorates and it becomes difficult to achieve the residual solvent content of the fiber obtained of 0.1% by mass or less. In addition, when the amide solvent concentration exceeds 60% by mass, coagulation that is uniform even inside the fiber cannot be achieved, and thus it becomes difficult to achieve the residual solvent content of the fiber of 0.1% by mass or less. In this regard, it is appropriate that the time of the fiber immersion in the coagulation bath is within the range of 0.1 to 30 seconds.

[Plasticized-Drawing-Bath Drawing Step]

In the plasticized-drawing-bath drawing step, while the fiber obtained by coagulation in the coagulation bath is still in the plasticized state, the fiber is subjected to drawing treatment in a plasticized drawing bath.

The plasticized drawing bath liquid is not particularly limited and a conventionally known bath liquid can be used.

In order to obtain the fiber of this invention, it is necessary that the draw ratio in the plasticized drawing bath is within the range of 3.5 to 5.0 times, and more preferably within the range of 3.7 to 4.5 times. In the production of the fiber used in this invention, by conducting plasticized drawing with a specific draw ratio range in a plasticized drawing bath, the removal of the solvent from the coagulated fiber can be promoted and the residual solvent content of the fiber of 0.1% by mass or less can be achieved.

When the draw ratio in the plasticized drawing bath is less than 3.5 times, the removal of the solvent from the coagulated yarn becomes insufficient and it becomes difficult to achieve the residual solvent content of the fiber of 0.1% by mass or less. Further, the breaking tenacity becomes insufficient and the handling during the processing steps such as the spinning step becomes difficult. On the other hand, when the draw ratio exceeds 5.0 times, the single-fiber breakage occurs and the process stability deteriorates.

The temperature of the plasticized drawing bath is preferably within the range of 10 to 90°C. Preferably, when the temperature is within the range of 20 to 90°C, the process stability is excellent.

[Washing Step]

In the washing step, the fiber drawn in the plasticized drawing bath is thoroughly washed. Washing affects the quality of the fiber obtained and thus is preferably conducted in several stages. In particular, the temperature of the washing bath and the amide solvent concentration of the washing bath liquid in the washing step affect the extraction state of the amide solvent from the fiber and the penetration state of water into the fiber from the washing bath. Therefore, also for the purpose of controlling them in the most suitable states, it is preferable that the washing step is in several stages and the temperature condition and the concentration condition of the amide solvent are controlled.

The temperature condition and the concentration condition of the amide solvent are not particularly limited as long as the fiber finally obtained has satisfactory quality. However, when the temperature of the first washing bath is as high as 60°C or higher, water rapidly penetrates the fiber and huge voids are thus formed in the fiber, resulting in the deterioration of the quality. Accordingly, the temperature of the first washing bath is preferably as low as 30°C or lower.

When the solvent remains in the fiber, the environmental safety in the processing of a product using the fiber and in the use of a product formed using the fiber is not preferable. Accordingly, the content of the solvent contained in the fiber used in this invention is 0.1% by mass or less, and more preferably 0.08% by mass or less.

[Dry-Heat Treatment Step]

In the dry-heat treatment step, the fiber after the washing step is dried and heat-treated. The dry-heat treatment method is not particularly limited, and for example, a method using a hot roller, a hot plate or the like is mentioned. Through dry-heat treatment, the spun-dyed meta-type wholly aromatic polyamide fiber of this invention can be finally obtained.

In order to obtain the fiber of this invention, the heat treatment temperature in the dry-heat treatment step is preferably within the range of 260 to 350°C, and more preferably within the range of 270 to 340°C. When the heat treatment temperature is lower than 260°C, the crystallization of the fiber is insufficient, and the shrinkage of the fiber becomes large. On the other hand, when the temperature exceeds 350°C, the crystallization of the fiber becomes too advanced and the elongation at break deteriorates significantly. Further, when the dry-heat treatment temperature is within the range of 260 to 350°C, the maximum thermal shrinkage rate under the rate of temperature increase of 100°C/min and the temperature range of 25 to 500°C can be controlled to 7.5% or less, and the breaking tenacity of the fiber obtained can be improved.

[Crimping Step and the like]

The spun-dyed meta-type wholly aromatic polyamide fiber after the dry-heat treatment may be further subjected to crimping processing if necessary. Further, after the crimping processing, the fiber may be cut in an appropriate fiber length and subjected to the next steps. In addition, depending on the case, the fiber may be reeled as a multifilament yarn. Examples

This invention is explained further in detail by Examples and Comparative Examples below. In this regard, however, these Examples and Comparative Examples are for a better understanding of this invention, and the scope of this invention is not limited by these descriptions.

<Measurement Method>

Each physical property value of Examples and Comparative Examples was measured by the following method.

[Inherent Viscosity (I.V.)]

A polymer was dissolved in 97% concentrated sulfuric acid and the inherent viscosity was measured at 30°C using Ostwald viscometer.

[Lightness Index L*]

The lightness index L* value was calculated by usual processing after measuring the diffuse reflectance with an illuminant D65 with a field of -10 degrees.

[Fineness]

Based on JIS L1015, the corrected mass fineness was measured in accordance with method A and represented by the apparent fineness.

[Residual Solvent Content]

A fiber piece in an amount of 1.0 mg was collected and the content of the amide solvent remaining in the fiber was measured using gas chromatography (manufactured by Shimadzu Corporation, model: GC-2010). Then, the residual solvent concentration of the fiber was calculated from the standard curve obtained using the amide solvent as the standard sample.

[Maximum Thermal Shrinkage Rate]

Thermal mechanical analyzer EXSTAR6000 manufactured by SII is used as the measurement device, the fiber sample is separated in 480 dtex, and the fiber is pinched with a chuck and used as a measurement sample. The shrinkage rate based on the initial fiber length of the sample at each temperature was measured with the following condition, and among the shrinkage rate results obtained at each temperature, the shrinkage rate at the temperature, at which the shrinkage rate was the highest, was determined to be the maximum thermal shrinkage rate.

<Measurement Condition>

Measurement sample length: 10 mm
Rate of temperature increase: 100°C/min
Measurement temperature range: 25 to 500°C
Load applied on fiber sample: 1.2 cN

[Light Discoloration and Fading Degree (Color Difference: ΔE*) by Xenon Arc Fade Meter]

Using unirradiated staple fiber and light-irradiated staple fiber which had been irradiated with a xenon arc fade meter at 1.1 W/m$^2$ for 24 hours and 80 hours, the diffuse reflectance was measured with an illuminant D65 with a field of -10 degrees, and the lightness index L* value and the chromaticness indexes a* and b* values were calculated by usual processing. The area of the measurement light irradiation at this time was 30 mmΦ. The light discoloration and fading degree (color difference: ΔE*) was determined by the following equation in accordance with JIS Z-8730 using the values obtained.

[Equation 1]

$$\Delta E* = ((\Delta L*)^2 + (\Delta a*)^2 + (\Delta b*)^2)^{1/2}$$

[Light Discoloration and Fading Degree (Color Difference: ΔE*) by Carbon Arc Fade Meter]

Using unirradiated staple fiber and light-irradiated staple fiber which had been irradiated with a carbon arc fade meter at 135 V and 17 A for 24 hours and 72 hours, the diffuse reflectance was measured with an illuminant D65 with a field of -10 degrees, and the lightness index L* value and the chromaticness indexes a* and b* values were calculated by usual processing. The area of the measurement light irradiation at this time was 10 mmΦ. The light discoloration and fading degree (color difference: ΔE*) was determined by the same equation as that of the light discoloration and fading degree (color difference: ΔE*) by a xenon arc fade meter above using the values obtained.

[Ratio of Light Discoloration and Fading Degree (Color Difference: ΔE*)]

Using the light discoloration and fading degrees (ΔE*) between before and after the irradiation with a carbon arc fade meter at 135 V and 17 A for 72 hours, the proportion (%) of an Example value to a value of Comparative Example having a residual solvent content of the fiber of 0.4% by mass or more, in which the same pigment was added in the same amount, was calculated.

<Example 1>

[Spinning Solution Preparation Step]

In a reactor under dry nitrogen atmosphere, 721.5 parts by mass of N,N-dimethylacetamide (DMAc) having a moisture percentage of 100 ppm or less was weighed, 97.2 parts by mass (50.18 mol%) of metaphenylene diamine was dissolved in this DMAc, and the solution was cooled to 0°C. To the cooled DMAc solution, 181.3 parts by mass (49.82 mol%) of isophthalic chloride (abbreviated to IPC below) was further added gradually while the solution was stirred, and the polymerization reaction was conducted.

Next, 66.6 parts by mass of calcium hydroxide powder having an average particle size of 10 μm or less was weighed and slowly added to the polymer solution after the completion of the polymerization reaction, and the neutralization reaction was conducted. After the addition of calcium hydroxide was completed, the solution was further stirred for 40 minutes and a transparent polymer solution was obtained. Polymetaphenylene isophthalamide was isolated from the polymer solution obtained and the inherent viscosity (I.V.) measured was 1.65. Further, the polymer concentration of the polymer solution was 17%.

To this polymer solution, Pigment Blue 15 powder in a ratio of 0.95% by mass based on the polymer was uniformly dispersed, and a spinning solution (spinning dope) was produced by degassing under reduced pressure.

[Spinning/Coagulation Step]

The spinning dope above was discharged and spun from a spinneret having a hole diameter of 0.07 mm and a hole number of 500 into a coagulation bath having a bath temperature of 30°C. The composition of the coagulation liquid was water/DMAc = 45/55 (parts by mass) and the discharging and spinning into the coagulation bath was performed at a yarn speed of 7 m/minute.

[Plasticized-Drawing-Bath Drawing Step]

Subsequently, drawing was performed at a draw ratio of 3.7 times in a plasticized drawing bath at 40°C having a composition of water/DMAc = 45/55.

[Washing Step]

After drawing, washing was performed in a bath of water/DMAc = 70/30 at 20°C (immersion length: 1.8 m) and then in a water bath at 20°C (immersion length: 3.6 m), followed by thorough washing through a warm water bath at 60°C (immersion length: 5.4 m).

[Dry-Heat Treatment Step]

The fiber after washing was subjected to dry-heat treatment using a hot roller having a surface temperature of 300°C, and a spun-dyed meta-type wholly aromatic polyamide fiber was obtained.

[Crimping and Cutting Step]

The fiber obtained was crimped through a crimper and then cut with a cutter into short fibers of 51 mm, and raw spun-dyed meta-type wholly aromatic polyamide staple fiber was obtained. Each measurement result regarding the staple fiber obtained is shown in Table 1.

<Comparative Example 1>

Spun-dyed meta-type wholly aromatic polyamide staple fiber was produced in the same manner as in Example 1, except that the composition of the coagulation liquid was changed to water/DMAc (quantitative ratio) = 70/30 in the spinning/coagulation step. Each measurement result regarding the staple fiber obtained is shown in Table 1.

<Comparative Example 2>

Spun-dyed meta-type wholly aromatic polyamide staple fiber was produced in the same manner as in Example 1, except that the composition of the coagulation liquid was changed to water/DMAc (quantitative ratio) = 30/70 in the spinning/coagulation step. Each measurement result regarding the staple fiber obtained is shown in Table 1.

<Example 2>

Spun-dyed meta-type wholly aromatic polyamide staple fiber was produced in the same manner as in Example 1, except that a mixed pigment of Pigment Blue 60/Pigment Black 7 (Navy Blue) was used as the pigment. Each measurement result regarding the staple fiber obtained is shown in Table 1.

<Comparative Example 3>

Spun-dyed meta-type wholly aromatic polyamide staple fiber was produced in the same manner as in Example 2, except that the composition of the coagulation liquid was changed to water/DMAc (quantitative ratio) = 30/70 in the spinning/coagulation step. Each measurement result regarding the staple fiber obtained is shown in Table 1.

<Example 3>

Spun-dyed meta-type wholly aromatic polyamide staple fiber was produced in the same manner as in Example 1, except that Pigment Black 7 was used as the pigment. Each measurement result regarding the staple fiber obtained is shown in Table 1.

<Comparative Example 4>

Spun-dyed meta-type wholly aromatic polyamide staple fiber was produced in the same manner as in Example 3, except that the composition of the coagulation liquid was changed to water/DMAc (quantitative ratio) = 30/70 in the spinning/coagulation step. Each measurement result regarding the staple fiber obtained is shown in Table 1.

[Table 1]

| | Example 1 | Comparative Example 1 | Comparative Example 2 | Example 2 | Comparative Example 3 | Example 3 | Comparative Example 4 |
|---|---|---|---|---|---|---|---|
| Pigment Content (mass %) | 0.95 | 0.95 | 0.95 | 0.95 | 0.95 | 0.95 | 0.95 |
| Color | Blue | Blue | Blue | Navy Blue | Navy Blue | Black | Black |
| Lightness Index L* | 34.7 | 35.3 | 35.1 | 30.1 | 30.0 | 28.6 | 28.4 |
| Fineness (dtex) | 1.91 | 1.93 | 1.91 | 1.91 | 1.94 | 1.92 | 1.91 |
| Maximum Thermal Shrinkage Rate (%) | 6.3 | 7.6 | 10.5 | 7.0 | 8.8 | 7.1 | 8.2 |
| Residual Solvent Content (%) | 0.08 | 0.30 | 0.60 | 0.08 | 0.41 | 0.09 | 0.49 |
| Xenon Arc Fade Meter Evaluation — $\Delta E^*$ (24-hour irradiation) | 11.9 | 15.0 | 15.1 | Not measured | Not measured | Not measured | Not measured |
| $\Delta E^*$ (80-hour irradiation) | 20.0 | 24.5 | 30.0 | Not measured | Not measured | Not measured | Not measured |
| Carbon Arc Fade Meter Evaluation — $\Delta E^*$ (24-hour irradiation) | 1.59 | Not measured | 2.16 | 0.26 | 0.43 | 0.34 | 0.62 |
| $\Delta E^*$ (72-hour irradiation) | 2.40 | Not measured | 3.47 | 0.74 | 1.23 | 0.49 | 1.18 |
| Example $\Delta E^*$ /Comparative Example $\Delta E^*$ (%) | 69 | - | - | 60 | - | 42 | - |

Industrial Applicability

The fiber of this invention becomes a spun-dyed meta-type wholly aromatic polyamide fiber, in which the discoloration and fading of the fiber due to the light exposure for a long time and the thermal shrinkage due to high temperature heating such as the exposure to flame and the radiation heat are prevented. Accordingly, the spun-dyed meta-type wholly aromatic polyamide fiber of this invention can be used preferably for a firefighter suit or a heat-resistant work suit which requires these characteristics.

**Claims**

1.   A spun-dyed meta-type wholly aromatic polyamide fiber, wherein the residual solvent content is 0.1% by mass or less based on the whole mass of the fiber;
wherein said spun-dyed meta-type wholly aromatic polyamide fiber comprises a pigment, and
wherein the residual solvent content is determined using the gas chromatographic method referred to in the description.

2.   The spun-dyed meta-type wholly aromatic polyamide fiber according to claim 1, wherein the color difference ($\Delta E^*$) between before and after irradiation with a carbon arc fade meter at 135 V and 17 A for 72 hours is 75% or less of the color difference ($\Delta E^*$)of a spun-dyed meta-type wholly aromatic polyamide fiber having a residual solvent content of the fiber of 0.4% by mass or more, in which the same pigment is added in the same amount.

3.   The spun-dyed meta-type wholly aromatic polyamide fiber according to claim 1, wherein the color difference ($\Delta E^*$) between before and after irradiation with a xenon arc fade meter at 1.1 W/m$^2$ for 80 hours is 24.0 or less.

4.   The spun-dyed meta-type wholly aromatic polyamide fiber according to claim 1, wherein the color difference ($\Delta E^*$) between before and after irradiation with a carbon arc fade meter at 135 V and 17 A for 72 hours is 2.5 or less.

5.   The spun-dyed meta-type wholly aromatic polyamide fiber according to any one of claims 1 to 4, wherein the maximum thermal shrinkage rate under a rate of temperature increase of 100°C/min and a temperature range of 25 to 500°C is 7.5% or less.

**Patentansprüche**

1.   Spinngefärbte vollaromatische Polyamidfaser vom meta-Typ, wobei der Restlösungsmittelgehalt 0,1 Massen-% oder weniger, bezogen auf die Gesamtmasse der Faser, beträgt;
wobei die spinngefärbte vollaromatische Polyamidfaser vom meta-Typ ein Pigment umfasst und
wobei der Restlösungsmittelgehalt nach der Gaschromatographiemethode, auf die in der Beschreibung Bezug genommen wird, bestimmt wird.

2.   Spinngefärbte vollaromatische Polyamidfaser vom meta-Typ nach Anspruch 1, wobei die Farbdifferenz ($\Delta E^*$) zwischen vor und nach Bestrahlung mit einem Kohlebogen-Fadeometer bei 135 V und 17 A über einen Zeitraum von 72 Stunden 75 % oder weniger der Farbdifferenz ($\Delta E^*$) einer spinngefärbten vollaromatischen Polyamidfaser vom meta-Typ mit einem Restlösungsmittelgehalt der Faser von 0,4 Massen-% oder mehr, der das gleiche Pigment in der gleichen Menge zugesetzt wird, beträgt.

3.   Spinngefärbte vollaromatische Polyamidfaser vom meta-Typ nach Anspruch 1, wobei die Farbdifferenz ($\Delta E^*$) zwischen vor und nach Bestrahlung mit einem Kohlebogen-Fadeometer bei 1,1 W/m$^2$ über einen Zeitraum von 80 Stunden 24,0 oder weniger beträgt.

4.   Spinngefärbte vollaromatische Polyamidfaser vom meta-Typ nach Anspruch 1, wobei die Farbdifferenz ($\Delta E^*$) zwischen vor und nach Bestrahlung mit einem Kohlebogen-Fadeometer bei 135 V und 17 A über einen Zeitraum von 72 Stunden 2,5 oder weniger beträgt.

5.   Spinngefärbte vollaromatische Polyamidfaser vom meta-Typ nach einem der Ansprüche 1 bis 4, wobei die maximale Wärmeschrumpfungsrate unter einer Temperaturerhöhungsrate von 100 °C/min und einem Temperaturbereich von 25 bis 500 °C 7,5 % oder weniger beträgt.

**Revendications**

1.  Fibre de polyamide entièrement aromatique de type méta colorée dans la masse, la teneur en solvant résiduel étant de 0,1 % en masse ou moins sur la base de la masse totale de la fibre ; ladite fibre de polyamide entièrement aromatique de type méta colorée dans la masse comprenant un pigment, et la teneur en solvant résiduel étant déterminée à l'aide du procédé de chromatographie en phase gazeuse en référence dans la description.

2.  Fibre de polyamide entièrement aromatique de type méta colorée dans la masse selon la revendication 1, la différence de couleur ($\Delta E^*$) entre avant et après irradiation avec un instrument de mesure de décoloration à arc de carbone à 135 V et 17 A pendant 72 heures étant de 75 % ou moins de la différence de couleur ($\Delta E^*$) d'une fibre de polyamide entièrement aromatique de type méta colorée dans la masse possédant une teneur en solvant résiduel de la fibre de 0,4 % en masse ou plus, dans laquelle le même pigment est ajouté en la même quantité.

3.  Fibre de polyamide entièrement aromatique de type méta colorée dans la masse selon la revendication 1, la différence de couleur ($\Delta E^*$) entre avant et après irradiation avec un instrument de mesure de décoloration à arc au xénon à 1,1 W/m$^2$ pendant 80 heures étant de 24,0 ou moins.

4.  Fibre de polyamide entièrement aromatique de type méta colorée dans la masse selon la revendication 1, la différence de couleur ($\Delta E^*$) entre avant et après irradiation avec un instrument de mesure de décoloration à arc de carbone à 135 V et 17 A pendant 72 heures étant de 2,5 ou moins.

5.  Fibre de polyamide entièrement aromatique de type méta colorée dans la masse selon l'une quelconque des revendications 1 à 4, le taux de retrait thermique maximal sous une vitesse d'augmentation de température de 100 °C/min et une plage de température de 25 à 500 °C étant de 7,5 % ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006016709 A
- JP 2003239136 A
- JP 2229281 A